# EUROPÄISCHE PATENTSCHRIFT

(11) **EP 2 735 884 B1**
(45) Veröffentlichungstag und Bekanntmachung des Hinweises auf die Patenterteilung: **24.08.2016**
(21) Anmeldenummer: 13191341.0
(22) Anmeldetag: 04.11.2013
(51) Int. Cl.: G01S 7/28, G08G 1/16, G01S 13/93

(54) **Fahrzeugassistenzsystem eines Fahrzeugs**
Vehicle assistance system of a vehicle
Système d'assistance de véhicule

(30) Priorität: 23.11.2012 DE 102012111318
(43) Veröffentlichungstag der Anmeldung: 28.05.2014
(73) Patentinhaber: Hella KGaA Hueck & Co., 59552 Lippstadt (DE)
(72) Erfinder: Mühlenberg, Martin, 59494 Soest (DE); Wixforth, Thomas, 33330 Gütersloh (DE)

(56) Entgegenhaltungen:
- WO-A1-2005/073753
- DE-A1-102010 003 646
- DE-A1-102012 006 368
- US-A- 5 008 678
- US-A- 5 712 640
- US-A1- 2002 147 534

## Beschreibung

Die vorliegende Erfindung betrifft ein Fahrassistenzsystem eines Fahrzeugs für die Überwachung von Querverkehr sowie ein Fahrzeug, aufweisend zumindest ein Fahrassistenzsystem für die Überwachung von Querverkehr.

Fahrassistenzsysteme für Fahrzeuge sind grundsätzlich bekannt. So sind beispielsweise Radarsendeantennen und Radarempfangsantennen bekannt, um die Umgebung eines Fahrzeugs auf Objekte zu überwachen. Diese Überwachungssensoren werden z. B. für Parkkontrollsysteme, Abstandswarnsysteme oder Spurhalteassistenten eingesetzt. Auch ist es bereits bekannt, dass solche Sensoren sogenannte Überwachungsbereiche, welche auch als Antennenkeulen bezeichnet werden, aufweisen. Beispielsweise zeigt die EP 1 506 432 B2 eine derartige Sensorvorrichtung, welche nicht nur eine, sondern zwei solche Antennenkeulen ausbildet. Diese werden im Stand der Technik als Hauptantennenkeule und Nebenantennenkeule bezeichnet. Sie werden eingesetzt, um den toten Winkel eines Fahrzeugs sowie separat davon den rückwärtigen Bereich des Fahrzeugs zu überwachen.

Nachteilhaft bei bekannten Fahrassistenzsystemen ist es, dass diese einen fokussierten Überwachunasbereich aufweisen. So wird z.B. in der EP1506432 B2, US20020147534 A1, WO2005/073753 A1 und US5008678 beschrieben, dass die einzelnen Antennenkeulen einander nicht überlappen und dementsprechend dazwischen ein toter Bereich hinsichtlich der Überwachungscharakteristik entsteht. Bei bekannten Anwendungssystemen, z. B. zur Überwachung des toten Winkels eines Fahrzeugs sowie des rückwärtigen Bereichs hinter einem Fahrzeug, ist dieser tote Bereich für die Sicherheit des Betriebs des Fahrzeugs nicht weiter von Relevanz. Ist es jedoch gewünscht, den Querverkehr vor, neben oder hinter einem Fahrzeug zu überwachen, also einen Verkehrsfluss, welcher sich winklig, insbesondere rechtwinklig zur Fahrtrichtung des Fahrzeugs bewegt, so kann diese Überwachungslücke zu Sicherheitsrisiken führen. Insbesondere ist es für eine solche Regelung gewünscht, dass mit hoher Sicherheit der Querverkehr von seinem Auftauchen über das Vorbeifahren bis zum Verschwinden aus der Fahrtrichtung des Fahrzeugs überwacht werden kann. Dies ist mit bekannten Fahrassistenzsystemen nur lückenhaft möglich, da eine kontinuierliche Überwachung des Gegenverkehrs vom seitlichen Auftauchen auf der einen Seite des Fahrzeugs über das Vorbeifahren vor oder hinter dem Fahrzeug zum seitlichen Verschwinden auf der anderen Seite des Fahrzeugs nicht möglich ist.

Es ist Aufgabe der vorliegenden Erfindung, die voranstehend beschriebenen Nachteile zumindest teilweise zu beheben. Insbesondere ist es Aufgabe der vorliegenden Erfindung, ein Fahrassistenzsystem eines Fahrzeugs sowie ein Fahrzeug aufweisend zumindest ein Fahrassistenzsystem zur Verfügung zu stellen, welche in kostengünstiger und einfacher Weise eine möglichst sichere Überwachung von Querverkehr relativ zum Fahrzeug ermöglichen.

Voranstehende Aufgabe wird gelöst durch ein Fahrassistenzsystem mit den Merkmalen des Anspruchs 1 und durch ein Fahrzeug mit den Merkmalen des Anspruchs 6. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Fahrassistenzsystem beschrieben sind, selbstverständlich auch im Zusammenhang mit dem erfindungsgemäßen Fahrzeug und jeweils umgekehrt, so dass bzgl. der Offenbarung zu den einzelnen Erfindungsaspekten stets wechselseitig Bezug genommen wird bzw. werden kann.

Ein erfindungsgemäßes Fahrassistenzsystem eines Fahrzeugs dient der Überwachung von Querverkehr. Ein solches Fahrassistenzsystem weist eine Sendevorrichtung für das Aussenden von elektromagnetischen Signalen und eine Empfangsvorrichtung für das Empfangen von elektromagnetischen Signalen auf. Ein erfindungsgemäßes Fahrassistenzsystem zeichnet sich dadurch aus, dass die Sendevorrichtung einen nierenförmigen Überwachungsbereich mit einer ersten Überwachungsrichtung und mit einer zweiten Überwachungsrichtung aufweist.

Ein erfindungsgemäßes Fahrassistenzsystem wird für die Überwachung von Querverkehr verwendet, also für die Überwachung von Verkehrsfahrzeugen, welche sich winklig relativ zur Fahrtrichtung des Fahrzeugs bewegen. Dies kann sowohl vor als auch hinter dem Fahrzeug der Fall sein. Typische Einsatzsituationen sind Kreuzungsbereiche bzw. Ein- oder Ausparkvorgänge von Querparklücken, in welchen die Überwachung von Querverkehr von Vorteil ist. Ziel dieser Querverkehrsüberwachung ist es, den Querverkehr bereits zu erkennen bevor er in die Fahrtrichtung des Fahrzeugs, also in die zu erwartende Bewegungsfläche des Fahrzeugs, eintritt. Hierzu ist in erfindungsgemäßer Weise nun mit dem Fahrassistenzsystem zusätzlich zu der Fahrtrichtungsüberwachung auch eine seitliche Überwachung möglich. Durch die erfindungsgemäße Ausbildung der Sendevorrichtung mit einem nierenförmigen Überwachungsbereich entsteht keine Lücke zwischen der seitlichen Überwachung und der Front- bzw. rückwärtigen Überwachung. Vielmehr kann das seitliche Auftauchen eines Querverkehrs verfolgt werden bis dieser Querverkehr sich vor bzw. hinter dem Fahrzeug befindet. Eine Lücke zwischen unterschiedlichen Überwachungsbereichen wird auf diese Weise wirksam vermieden, wodurch sich die Sicherheit einer Regelung mithilfe eines erfindungsgemäßen Fahrassistenzsystems deutlich erhöht.

Unter einem nierenförmigen Überwachungsbereich ist ein Überwachungsbereich zu verstehen, welcher mit Bezug auf die Fahrtrichtung zwei Hauptüberwachungsrichtungen bzw. grundsätzlich zwei Überwachungsrichtungen aufweist. Während üblicherweise Fahrassistenzsysteme zur Ausbildung einer einzigen Antennenkeule oder separat voneinander ausgebildeten Antennenkeulen ausgeführt sind, kann in erfindungsgemäßer Weise ein komplexerer Überwachungsbereich zur Verfügung gestellt werden. Mit anderen Worten bildet sich eine einzelne Antennenkeule aus, welche jedoch keine Keulenform, sondern eine Nierenform aufweist. Die beiden Überwachungsrichtungen sind dabei vorzugsweise in Relation zur Fahrtrichtung zu verstehen. So ist eine Überwachungsrichtung vorzugsweise in die Fahrtrichtung gerichtet. Die zweite Überwachungsrichtung ist winklig zu der ersten Überwachungsrichtung angeordnet und zeigt vorzugsweise in einen seitlichen Bereich vor bzw. hinter das Fahrzeug. Die beiden Überwachungsrichtungen sind derart ausgebildet, dass sie den Überwachungsbereich nierenförmig aufspannen, so dass eine Lücke zwischen den beiden Überwachungsrichtungen vermieden wird.

In erfindungsgemäßer Weise sind die Sendevorrichtung und die Empfangsvorrichtung insbesondere für das Aussenden von Radarsignalen ausgebildet. Diese Sendevorrichtung und/oder die Empfangsvorrichtung können dafür z. B. eine Sendeantenne bzw. eine Empfangsantenne aufweisen. Selbstverständlich ist auch das Vorsehen von mehr als einer Sendeantenne und/oder mehr als einer Empfangsantenne im Rahmen der vorliegenden Erfindung möglich.

Die Überwachungsrichtungen, welche in erfindungsgemäßer Weise auch als Hauptüberwachungsrichtungen des nierenförmigen Überwachungsbereichs bezeichnet werden können, schließen zueinander vorzugsweise einen Winkel ein. Dieser Winkel ist insbesondere im Bereich zwischen ca. 30° und ca. 150° ausgebildet.

In erfindungsgemäßer Weise kann ein Fahrassistenzsystem weiter eine Regelvorrichtung aufweisen, welche für die Auswertung der empfangenen Reflexionssignale der elektromagnetischen Signale ausgebildet ist. Auch kann hier die Art und Weise der Aussendung der elektromagnetischen Signale eingestellt werden.

Es kann von Vorteil sein, wenn bei einem erfindungsgemäßen Fahrassistenzsystem die erste Überwachungsrichtung und die zweite Überwachungsrichtung miteinander einen Überwachungswinkel im Bereich zwischen ca. 30° und ca. 150°, vorzugsweise im Bereich zwischen ca. 60° und ca. 120°, besonders bevorzugt im Bereich um ca. 90° einschließen. Insbesondere stehen die beiden Überwachungsrichtungen zueinander senkrecht. Bevorzugt ist es, wenn bei einem erfindungsgemäßen Fahrassistenzsystem ausschließlich zwei Überwachungsrichtungen und nicht etwa drei oder mehr Überwachungsrichtungen zur Verfügung gestellt werden. Dadurch kann eine effektive Kombination der Überwachung des Querverkehrs beim seitlichen Auftauchen und beim Vorbeifahren vor bzw. hinter dem eigenen Fahrzeug erfolgen. Insbesondere wird eine Lücke in der Überwachung, also eine Lücke im Überwachungsbereich, wirksam vermieden. Damit kann die Sicherheit bei der Überwachung der Umgebung des Fahrzeugs durch ein erfindungsgemäßes Fahrassistenzsystem erhöht werden.

Vorteilhaft ist es ebenfalls, wenn bei einem erfindungsgemäßen Fahrassistenzsystem eine der beiden Überwachungsrichtungen parallel oder im Wesentlichen parallel zur Fahrtrichtung des Fahrzeugs anordenbar ist. Befindet sich das Fahrassistenzsystem an einem Fahrzeug montiert, so ist die eine der beiden Überwachungsrichtungen parallel oder im Wesentlichen parallel zur Fahrtrichtung ausgerichtet. Dies kann als Überwachungsrichtung ausgelegt werden, welche vor bzw. hinter ein Fahrzeug gerichtet ist und dementsprechend den Querverkehr erkennt, welcher sich bereits vor bzw. hinter dem Fahrzeug befindet. Die dazu winklig angeordnete zweite Überwachungsrichtung kann dementsprechend eine seitliche Wahrnehmung bzw. eine seitliche Überwachung durchführen. Auf diese Weise kann Querverkehr bereits erkannt werden, wenn er in dieser zweite Überwachungsrichtung in den Überwachungsbereich eintritt. Somit erfolgt ein seitliches Erkennen des Querverkehrs bereits bevor dieses Querverkehrfahrzeug sich vor bzw. hinter dem Fahrzeug befindet. Somit kann bereits zu einem früheren Zeitpunkt ein Eingriff in die Bewegung des Fahrzeugs erfolgen, so dass die Sicherheit bei der Vermeidung von einer Kollision mit dem Querverkehrsfahrzeug erhöht wird.

Vorteilhaft ist es darüber hinaus, wenn bei einem erfindungsgemäßen Fahrassistenzsystem die Sendevorrichtung eine einzige Sendeantenne aufweist, welche den nierenförmigen Überwachungsbereich erzeugt. Eine einzige Sendeantenne kann z. B. ausgebildet sein, um über komplexe Strukturen der Antenne die nierenförmige Form des Überwachungsbereichs zu erzeugen. Dabei handelt es sich um eine besonders einfache und kostengünstige Lösung für ein erfindungsgemäßes Fahrassistenzsystem. Auch kann damit eine Reduktion des notwendigen Baumaßes für ein Fahrassistenzsystem erzielt werden. Es kann also vorzugsweise ein Fahrassistenzsystem zur Verfügung gestellt werden, welches sich in Größe und Bauform und vorzugsweise auch hinsichtlich der Kosten nicht von bereits bekannten Fahrassistenzsystemen, insbesondere von bekannten Radarsensorsystemen unterscheidet.

Vorteilhaft ist es darüber hinaus, wenn bei einem erfindungsgemäßen Fahrassistenzsystem die Erstreckung des nierenförmigen Überwachungsbereichs in der ersten Überwachungsrichtung im Wesentlichen der Erstreckung des nierenförmigen Überwachungsbereichs der zweiten Überwachungsrichtung entspricht. Unter dieser Erstreckung ist also die Überwachungsentfernung vom Fahrzeug weg zu verstehen. Mit anderen Worten erfolgt eine Überwachung eines Überwachungsabstands in der ersten Überwachungsrichtung im Wesentlichen gleich weit wie in der zweiten Überwachungsrichtung. Das führt vorzugsweise zu der Ausbildung der Nierenform des Überwachungsbereichs in symmetrischer oder im Wesentlichen symmetrischer Weise. Eine solche Ausführungsform bringt hinsichtlich der Einstellbarkeit und der Regelung Vorteile mit sich. Darüber hinaus kann ein symmetrischer bzw. im Wesentlichen symmetrischer nierenförmiger Überwachungsbereich deutlich kostengünstiger und einfacher konstruktiv durch eine entsprechende Sendevorrichtung zur Verfügung gestellt werden.

Ein weiterer Gegenstand der vorliegenden Erfindung ist ein Fahrzeug, aufweisend zumindest ein Fahrassistenzsystem für die Überwachung von Querverkehr mit einer Sendevorrichtung für das Aussenden von elektromagnetischen Signalen und einer Empfangsvorrichtung für das Empfangen von elektromagnetischen Signalen. Ein erfindungsgemäßes Fahrzeug zeichnet sich dadurch aus, dass die Sendevorrichtung einen nierenförmigen Überwachungsbereich mit einer ersten Überwachungsrichtung und mit einer zweiten Überwachungsrichtung aufweist. Vorzugsweise ist ein erfindungsgemäßes Fahrzeug mit einem erfindungsgemäßen Fahrassistenzsystem ausgestattet. Dementsprechend bringt ein erfindungsgemäßes Fahrzeug die gleichen Vorteile mit sich, wie sie ausführlich mit Bezug auf ein erfindungsgemäßes Fahrassistenzsystem erläutert worden sind.

Werden zwei oder mehr Fahrassistenzsysteme eingesetzt, so sind diese vorzugsweise identisch zueinander ausgebildet. Insbesondere beim Vorsehen von zwei bzw. vier Assistenzsystemen, also einem Assistenzsystem pro Ecke des Fahrzeugs, ist eine identische Ausbildung von großem Vorteil. Auf diese Weise werden die Kosten für das Gesamtsystem reduziert und gleichzeitig der Regelungsaufwand reduziert.

Ein erfindungsgemäßes Fahrzeug kann dahin gehend weitergebildet sein, dass zumindest ein Fahrassistenzsystem an einer Ecke des Fahrzeugs, insbesondere an einer vorderen Ecke des Fahrzeugs, angeordnet ist. Das Anordnen an der Ecke des Fahrzeugs ermöglicht eine besonders vorteilhafte Überwachungsstruktur. So kann bei dieser Anordnung die erste Überwachungsrichtung im Wesentlichen in Fahrtrichtung vor das Fahrzeug gerichtet sein, während die zweite Überwachungsrichtung im Wesentlichen seitlich vom Fahrzeug weggerichtet ist. Somit kann eine effektive und vor allem im Wesentlichen lückenlose Überwachung von Querverkehr ab dem seitlichen Auftauchen bis zum Erreichen des Bereichs vor dem Fahrzeug bzw. hinter dem Fahrzeug durchgeführt werden. Das Anbringen an der Ecke des Fahrzeugs erfolgt z. B. an dem Stoßfänger des Fahrzeugs, welcher bezogen auf die Außenabmaße des Fahrzeugs die äußerste jeweilige Ecke darstellt. Insbesondere handelt es sich dabei um eine der beiden vorderen Ecken des Fahrzeugs, also vorne links bzw. vorne rechts, so dass Querverkehr vor dem Fahrzeug erkannt werden kann. Selbstverständlich können jedoch auch alternativ oder zusätzlich eine oder mehrere der hinteren beiden Ecken des Fahrzeugs, also hinten links und/oder hinten rechts mit einem erfindungsgemäßen Fahrassistenzsystem ausgestattet sein. Erfindungsgemäß ist es besonders von Vorteil, wenn an allen Ecken des Fahrzeugs ein erfindungsgemäßes Fahrassistenzsystem vorgesehen ist, so dass in Rundumüberwachung sowohl vor dem Fahrzeug als auch hinter dem Fahrzeug ein Querverkehr vom seitlichen Auftauchen über das Vorbeifahren vor bzw. hinter dem Fahrzeug bis zum seitlichen Verschwinden auf der gegenüberliegenden Seite des Fahrzeugs eine Überwachung stattfinden kann.

Vorteilhaft ist es darüber hinaus, wenn bei einem erfindungsgemäßen Fahrzeug zumindest zwei Fahrassistenzsysteme vorgesehen sind, wobei diese derart ausgebildet und am Fahrzeug angeordnet sind, dass sich die nierenförmigen Überwachungsbereiche abschnittsweise in einem Überlappungsbereich überlappen. Dies führt zu einer Redundanz in der Überwachung, da Teilbereiche des Überwachungsbereichs bereits vom benachbarten Überwachungsbereich mit überwacht werden. Diese Überlappung führt dazu, dass eine höhere Sicherheit bei der Überwachung des Querverkehrs durchgeführt werden kann. Insbesondere eine Überlappung zwischen den seitlich angeordneten Fahrassistenzsystemen, also einem linken und einem rechten Fahrassistenzsystem, führt zu einer Vermeidung einer Lücke direkt vor bzw. direkt hinter dem Fahrzeug, wenn sich der Querverkehr von links nach rechts relativ zum Fahrzeug bewegt. Damit kann in kostengünstiger und einfacher Weise eine Redundanz bei der Überwachung und eine Erhöhung der Sicherheit bei der Überwachung erzielt werden.

Vorteilhaft ist es ebenfalls, wenn bei einem erfindungsgemäßen Fahrzeug an jeder Ecke des Fahrzeugs wenigstens ein Fahrassistenzsystem angeordnet ist. Dabei überlappen sich die benachbarten nierenförmigen Überwachungsbereiche jeweils in einem Überlappungsbereich. Dies führt sozusagen rundum zu der im voranstehenden Absatz beschriebenen Redundanz bzw. zu der Erhöhung der Sicherheit. Querverkehr kann somit lückenlos sowohl vor dem Fahrzeug als auch hinter dem Fahrzeug wie auch neben dem Fahrzeug in erfindungsgemäßer Weise mit hoher Sicherheit erkannt werden.

Die vorliegende Erfindung wird näher erläutert anhand der beigefügten Zeichnungsfiguren. Die dabei verwendeten Begrifflichkeiten "links", "rechts", "oben" und "unten" beziehen sich auf eine Ausrichtung der Zeichnungsfiguren mit normal lesbaren Bezugszeichen. Es zeigen schematisch:
- Fig. 1: eine erste Situation für die Überwachung von Querverkehr,
- Fig. 2: eine weitere Situation für die Überwachung von Querverkehr,
- Fig. 3: eine Ausführungsform eines erfindungsgemäßen Fahrzeugs mit einem erfindungsgemäßen Fahrassistenzsystem und
- Fig. 4: eine weitere Ausführungsform eines erfindungsgemäßen Fahrzeugs mit vier erfindungsgemäßen Fahrassistenzsystemen.

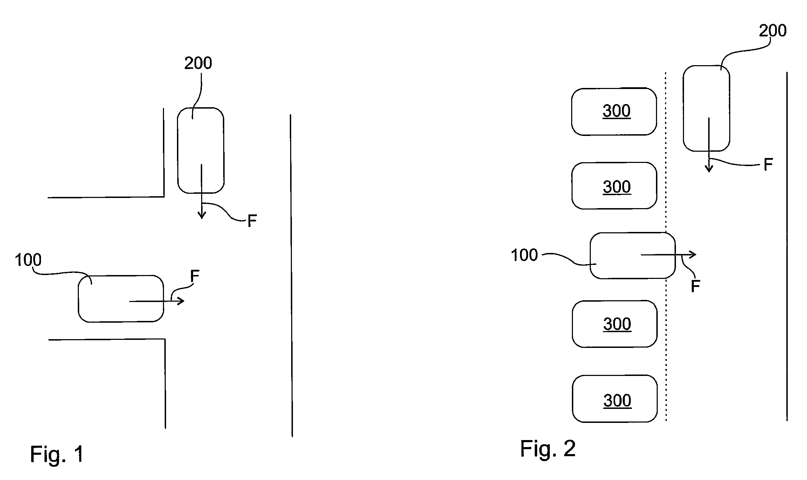

Die Figuren 1 und 2 zeigen zwei Möglichkeiten für eine Einsatzsituation eines erfindungsgemäßen Fahrassistenzsystems 10. Bei Figur 1 handelt es sich um eine Kreuzungssituation, bei welcher das Fahrzeug 100 mit einer Fahrtrichtung F nach rechts in eine Hauptstraße einbiegen möchte. Aus Richtung des Fahrzeugs 100 in Fahrtrichtung F gesehen links, in Figur 1 von oben kommend, befindet sich ein Querverkehr 200, mit einer Fahrtrichtung F nach unten. Die Fahrwege des Querverkehrs 200 und des Fahrzeugs 100 würden also kollidieren, wenn nicht einer der beiden Fahrer vorzeitig diese Kollision durch Abbremsen und Reduktion der Geschwindigkeit vermeiden würde. In erfindungsgemäßer Weise kann ein Fahrassistenzsystem 10 bereits in der Situation, wie sie die Figur 1 zeigt, den Querverkehr 200 erkennen. Somit kann eine Warnung oder sogar ein Eingriff in die Regelung der Geschwindigkeit des Fahrzeugs 100 stattfinden, um eine Kollision mit dem Querverkehr 200 wirksam zu vermeiden.

In Figur 2 ist eine weitere Situation dargestellt, in welcher die Überwachung des Querverkehrs 200 von Vorteil sein kann. Es handelt sich hier um eine sogenannte Querparksituation, bei welcher ein Fahrzeug 100 zwischen einer Vielzahl von parkenden Fahrzeugen 300 eingeparkt ist. Die Fahrtrichtung F ist die Rückwärtsfahrtrichtung des Fahrzeugs 100, welches rückwärts aus der Parklücke zwischen den parkenden Fahrzeugen 300 ausparken möchte. An der vorbeiführenden Straße kommt ein Querverkehr 200 von oben heran und bringt die Gefahr einer Kollision mit dem Fahrzeug 100 mit sich. In der Situation, wie sie die Figur 2 zeigt, kann bereits eine Erkennung des Querverkehrs 200 mit einem erfindungsgemäßen Fahrassistenzsystem 10 erfolgen, so dass bereits frühzeitig zu diesem Zeitpunkt ein Eingriff in die Regelung des Fahrzeugs 100 bzw. eine Warnung des Fahrers des Fahrzeugs 100 stattfinden kann. Somit kann der Querverkehr 200 rechtzeitig erkannt werden und eine Kollision mit demselben vermieden werden.

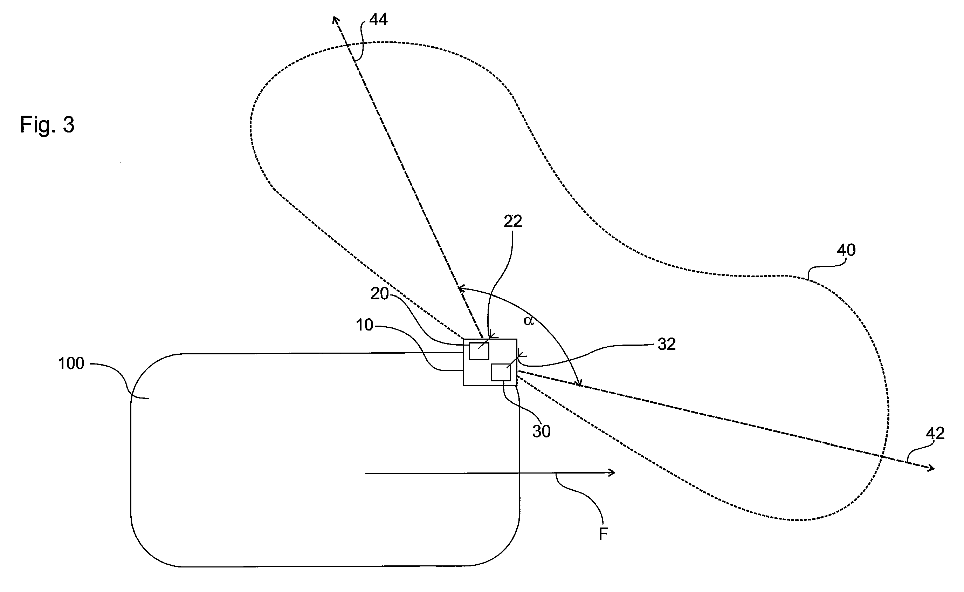

In Figur 3 ist eine erste Ausführungsform eines erfindungsgemäßen Fahrassistenzsystems 10 dargestellt. Dieses ist mit einer Sendevorrichtung 20 und einer Empfangsvorrichtung 30 für elektromagnetische Signale versehen. Die Sendevorrichtung 20 weist eine einzige Sendeantenne 22 für das Aussenden der elektromagnetischen Signale auf. Die Empfangsvorrichtung 30 ist mit einer einzigen Empfangsantenne 32 für das Empfangen der elektromagnetischen Signale ausgebildet. Das gesamte Fahrassistenzsystem 10 ist ausgebildet für das Erzeugen eines Überwachungsbereichs 40 in Nierenform, wie es die Draufsicht der Figur 3 zeigt. Diese Nierenform wird hinsichtlich der beiden Nierenenden aufgespannt durch zwei Überwachungsrichtungen 42 und 44. Zwischen diesen beiden Überwachungsrichtungen 42 und 44 besteht keine Lücke, so dass die Überwachung während des gesamten Passiervorgangs des Querverkehrs 200 durchgeführt werden kann.

Wie der Figur 3 gut zu entnehmen ist, sind die beiden Überwachungsrichtungen 42 und 44 zueinander winklig angeordnet. Sie schließen miteinander einen Überwachungswinkel α ein, welcher bei dieser Ausführungsform ca. 140° beträgt. Bei dieser Ausführungsform ist die erste Überwachungsrichtung 42 sogar über die Fahrtrichtung F des Fahrzeugs 100 hinaus gerichtet. Die erste Überwachungsrichtung 42 überwacht also den Bereich vor dem Fahrzeug 100, während die zweite Überwachungsrichtung 44 den Bereich links vom Fahrzeug bzw. links vor dem Fahrzeug überwacht.

Wird ein Fahrassistenzsystem 10 gemäß der Ausführungsform der Figur 3 bei einem Fahrzeug 100 eingesetzt, so muss dies nicht zwangsläufig nur bei einer einzelnen Ecke 110a, 110b, 120a oder 120b des Fahrzeugs 100 der Fall sein.

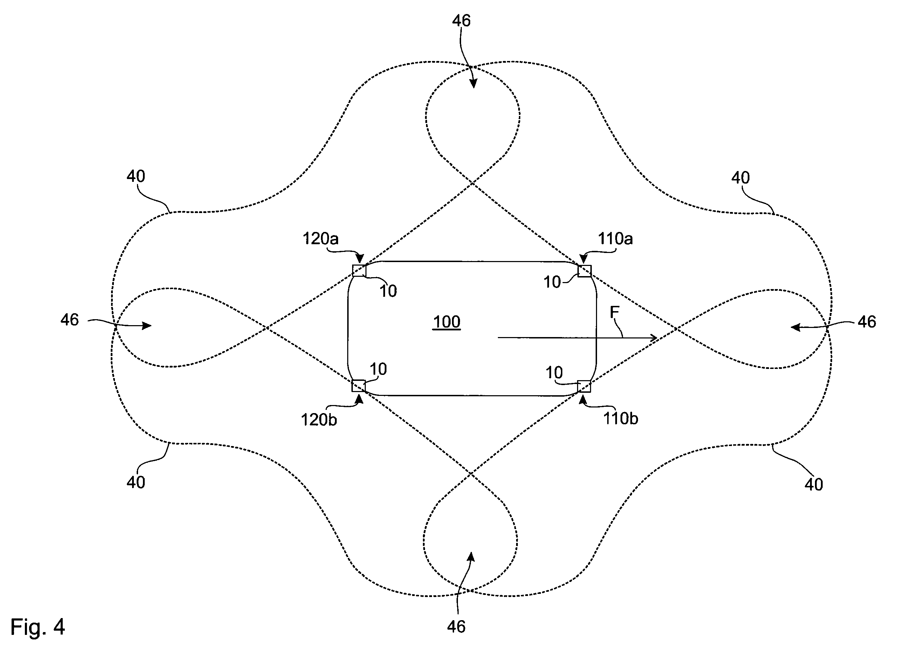

Z. B. ist in Figur 4 eine Ausführungsform eines Fahrzeugs 100 gemäß der vorliegenden Erfindung dargestellt, bei welcher alle vier Ecken 120a, 120b, 110a und 110b mit einem erfindungsgemäßen Fahrassistenzsystem 10 ausgestattet sind. Diese einzelnen Fahrassistenzsysteme 10 können z. B. ausgebildet sein, wie dies in Figur 3 dargestellt ist.

Somit kann eine Rundumüberwachung des Fahrzeugs 100 erfolgen. Dies führt insbesondere zu einer Redundanz in sogenannten Überlappungsbereichen 46 zwischen den einzelnen benachbarten Überwachungsbereichen 40. Diese Überlappung in den Überlappungsbereichen 46 führt darüber hinaus zu einer Vermeidung von Lücken in der Überwachung zwischen benachbarten Überwachungsbereichen 40, so dass die Sicherheit der Überwachung noch weiter verbessert werden kann.

Wird ein Fahrzeug 100 in einer Situation, wie sie die Figur 1 oder die Figur 2 zeigt, mit dem Fahrassistenzsystem ausgestattet, so kann die Überwachung wie folgt erfolgen. Der Querverkehr 200 wird bereits erkannt, wenn er sich noch links vor bzw. links hinter dem Fahrzeug 100 seitlich befindet. Zu diesem Zeitpunkt kann ein Eingriff in die Regelung des Fahrzeugs oder eine Warnung des Fahrers erfolgen. Die Überwachung erfolgt lückenlos, während sich das Querverkehrsfahrzeug 200 nähert und vor das Fahrzeug 100 gelangt. Darüber hinaus kann diese Überwachung fortgeführt werden, bis sich das Fahrzeug rechts vor dem Fahrzeug bzw. rechts hinter dem Fahrzeug wieder seitlich entfernt und damit die Gefahr einer Kollision ausgeschlossen werden kann. Auf diese Weise kann im Wesentlichen in lückenloser Weise die Überwachung des Querverkehrs 200 erfolgen, so dass eine Kollisionswarnung bzw. ein Eingriff in die Regelung des Fahrzeugs hinsichtlich der bestehenden Kollisionsgefahr möglich ist.

### Bezugszeichenliste

- 10: Fahrassistenzsystem
- 20: Sendevorrichtung
- 22: Sendeantenne
- 30: Empfangsvorrichtung
- 32: Empfangsantenne
- 40: nierenförmiger Überwachungsbereich
- 42: erste Überwachungsrichtung
- 44: zweite Überwachungsrichtung
- 46: Überlappungsbereich

- 100: Fahrzeug
- 110a: vordere Ecke
- 110b: vordere Ecke
- 120a: hintere Ecke
- 120b: hintere Ecke

- 200: Querverkehr
- 300: Parkende Fahrzeuge

- α: Überwachungswinkel
- F: Fahrtrichtung

## Patentansprüche

1. Fahrassistenzsystem (10) an einer Ecke (110a,110b,120a,120b) eines Fahrzeugs (100) für die Überwachung von Querverkehr (200), aufweisend eine Sendevorrichtung (20) für das Aussenden von elektromagnetischen Signalen und eine Empfangsvorrichtung (30) für das Empfangen von elektromagnetischen Signalen,
**dadurch gekennzeichnet,**
**dass** die Sendevorrichtung (20) einen nierenförmigen Überwachungsbereich (40) mit einer ersten Überwachungsrichtung (42) und mit einer zweiten Überwachunpsrichtung (44) aufweist, sodass durch eine Sendeantenne der Sendevorrichtung eine einzelne Antennenkeule in Nierenform ausgebildet ist, wobei zwischen beiden Überwachungsrichtungen (42,44) keine Lücke besteht, sodass das seitliche Auftauchen eines Querverkehrs (200) verfolgt werden kann bis dieser Querverkehr (200) sich vor bzw. hinter dem Fahrzeug (100) befindet.

2. Fahrassistenzsystem (10) nach Anspruch 1,
**dadurch gekennzeichnet,**
**dass** die erste Überwachungsrichtung (42) und die zweite Überwachungsrichtung (44) miteinander einen Überwachungswinkel (a) im Bereich zwischen ca. 30° und ca. 150°, vorzugsweise im Bereich zwischen ca. 60° und ca. 120°, besonders bevorzugt im Bereich um ca. 90° einschließen

3. Fahrassistenzsystem (10) nach Anspruch 2,
**dadurch gekennzeichnet,**
**dass** eine der beiden Überwachungsrichtungen (42, 44) parallel oder im Wesentlichen parallel zur Fahrtrichtung (F) des Fahrzeugs (100) anordenbar ist.

4. Fahrassistenzsystem (10) nach einem der vorangegangenen Ansprüche,
**dadurch gekennzeichnet,**
**dass** die Sendevorrichtung (20) eine einzige Sendeantenne (22) aufweist, welche den nierenförmigen Überwachungsbereich (40) erzeugt.

5. Fahrassistenzsystem (10) nach einem der vorangegangenen Ansprüche
**dadurch gekennzeichnet,**
**dass** die Erstreckung des nierenförmigen Überwachungsbereichs (40) in der ersten Überwachungsrichtung (42) im Wesentlichen der Erstreckung des nierenförmigen Überwachungsbereichs (40) in der zweiten Überwachungsrichtung (44) entspricht.

6. Fahrzeug (100), aufweisend zumindest ein Fahrassistenzsystem (10) nach Anspruch 1.

7. Fahrzeug (100) nach Anspruch 6,
**dadurch gekennzeichnet,**
**dass** das Fahrassistenzsystem (10) entsprechend der Ansprüche 2 bis 5 ausgebildet ist.

8. Fahrzeug (100) nach einem der Ansprüche 6 oder 7,
**dadurch gekennzeichnet,**
**dass** zumindest ein Fahrassistenzsystem (10) an einer Ecke (110a, 110b, 120a, 120b) des Fahrzeugs (100), insbesondere an einer vorderen Ecke (110a, 110b) des Fahrzeugs (100), angeordnet ist.

9. Fahrzeug (100) nach einem der Ansprüche 6 bis 8,
**dadurch gekennzeichnet,**
**dass** zumindest zwei Fahrassistenzsysteme (10) vorgesehen sind, wobei diese derart ausgebildet und am Fahrzeug (100) angeordnet sind, dass sich die nierenförmigen Überwachungsbereiche (40) abschnittsweise in wenigstens einem Überlappungsbereich (46) überlappen.

10. Fahrzeug (100) nach einem der Ansprüche 6 bis 9,
**dadurch gekennzeichnet,**
**dass** an jeder Ecke (110a, 110b, 120a, 120b) des Fahrzeugs (100) wenigstens ein Fahrassistenzsystem (10) angeordnet ist, wobei sich die benachbarten nierenförmigen Überwachungsbereiche (40) jeweils in wenigstens einem Überlappungsbereich (46) überlappen.

## Claims

1. Driver assistance system (10) on a corner (110a, 110b,120a,120b) of a vehicle (100) for the monitoring of cross traffic (200), having a transmitter device (20) for the sending of electromagnetic signals and a receiving device (30) for the reception of electromagnetic signals,
**characterized in that**
the transmitter device (20) has a kindey-shaped monitoring range (40) with a first monitoring device (42) and with a second monitoring device (44), so that by means of a transmitter aerial of the transmitter device a single, kidney-shaped aerial lobe is embodied, wherein there is no gap between the two monitoring devices (42, 44), so that the appearance of cross traffic (200) from the side can be monitored until this cross traffic (200) is in front of or behind the vehicle (100).

2. Driver assitance system (10) according to Claim 1,
**characterized in that**
the first monitoring device (42) and the second monitoring device (44) together cover a monitoring angle (a) in the range between approx. 30° and 150°, preferably in the range between approx. 60° and 120°, and particularly preferably in the range of approx. 90°.

3. Driver assitance system (10) according to Claim 2,
**characterized in that**
one of the two monitoring devices (42, 44) can be arranged in parallel or essentially parallel to the driving direction (F) of the vehicle (100).

4. Driver assitance system (10) according to one of the previous Claims,
**characterized in that**
the transmitter device (20) has a single transmitter aerial (22), which generates the kidneyshaped monitoring range (40).

5. Driver assitance system (10) according to one of the previous Claims,
**characterized in that**
the extension of the kidneyshaped monitoring range (40) in the first monitoring direction (42) essentially corresponds to the extension of the kidney-shaped monitoring range (40) in the second monitoring direction (44).

6. Vehicle (100) having at least one driver assistance system (10) according to Claim 1.

7. Vehicle (100) according to Claim 6,
**characterized in that**
the driver assistance system (10) is embodied according to the Claims 2 to 5.

8. Vehicle (100) according to one of the Claims 6 or 7,
**characterized in that**
at least one driver assistance system (10) is arranged on one corner (110a, 110b, 120a, 120b) of the vehicle (100), and particularly on a front corner (110a, 110b) of the vehicle (100).

9. Vehicle (100) according to one of the Claims 6 to 8,
**characterized in that**
at least two driver assistance systems (10) are provided, wherein these are embodied and arranged on the vehicle (100) so that sections of the kidney-shaped monitoring ranges (40) overlap in at least one overlapping range (46).

10. Vehicle (100) according to one of the Claims 6 to 9,
**characterized in that**
at least one driver assistance system (10) is arranged on each corner (110a, 110b, 120a, 120b) of the vehicle (100), wherein the neighboring kidney-shaped monitoring ranges (40) each overlap in at least one overlapping range (46).

## Revendications

1. - Système d'assistance à la conduite (10) sur un coin (110a, 110b, 120a, 120b) d'un véhicule (100) pour la surveillance du trafic transversal (200), présentant un dispositif émetteur (20) pour émettre des signaux électromagnétiques et un dispositif récepteur (30) pour recevoir des signaux électromagnétiques,
**caractérisé en ce que**
le dispositif émetteur (20) présente une zone de surveillance réniforme (40) avec une première direction de surveillance (42) et avec une deuxième direction de surveillance (44), de sorte qu'un seul faisceau d'antenne réniforme se produise au moyen d'une antenne d'émission du dispositif émetteur, aucun espace ne demeurant entre les deux dispositifs de surveillance (42, 44), de manière que l'apparition latérale d'un trafic transversal (200) puisse être suivie jusqu'à ce trafic transversal (200) se trouve devant ou derrière le véhicule (100).

2. - Système d'assistance à la conduite (10) selon la revendication 1,
**caractérisé en ce que**
la première direction de surveillance (42) et la deuxième direction de surveillance (44) incluent ensemble un angle de surveillance (α) dans la zone entre environ 30° et environ 150°, de préférence dans la zone entre environ 60° et environ 120°, et plus préféré dans la zone autour de 90°.

3. - Système d'assistance à la conduite (10) selon la revendication 2,
**caractérisé en ce qu'**
une des deux directions de surveillance (42, 44) peut être disposée en parallèle ou essentiellement en parallèle au sens de conduite (F) du véhicule (100).
Page 1 de 3

4. - Système d'assistance à la conduite (10) selon l'une des revendications précédentes,
**caractérisé en ce que**
le dispositif émetteur (20) présente une seule antenne d'émission (22) qui produit la zone de surveillance réniforme (40).

5. - Système d'assistance à la conduite (10) selon l'une des revendications précédentes,
**caractérisé en ce que**
l'étendue de la zone de surveillance réniforme (40) dans la première direction de surveillance (42) correspond essentiellement à l'étendue de la zone de surveillance réniforme (40) dans la deuxième direction de surveillance (44).

6. - Véhicule (100), présentant au moins un système d'assistance à la conduite (10) selon la revendication 1.

7. - Véhicule (100) selon la revendication 6,
**caractérisé en ce que**
le système d'assistance à la conduite (10) est réalisé conforme aux revendications 2 à 5.

8. - Véhicule (100) selon l'une des revendications 6 à 7,
**caractérisé en ce qu'**
au moins un système d'assistance à la conduite (10) est disposé sur un coin (110a, 110b, 120a, 120b) du véhicule (100), surtout sur un coin avant (110a, 110b) du véhicule (100).

9. - Véhicule (100) selon l'une des revendications 6 à 8,
**caractérisé en ce qu'**
au moins deux systèmes d'assistance à la conduite (10) sont prévus, ceux-ci étant réalisés et disposés sur le véhicule (100) de telle manière que les zones de surveillance réniformes (40) se superposent section par section dans au moins une zone de superposition (46).

10. - Véhicule (100) selon l'une des revendications 6 à 9,
**caractérisée en ce que**
sur chaque coin (110a, 110b, 120a, 120b) du véhicule (100) au moins un système d'assistance à la conduite (10) est disposé, les zones de surveillance réniformes (40) avoisinantes se superposent chaque fois dans au moins une zone de superposition (46).
